(19) Europäisches Patentamt European Patent Office Office européen des brevets

(11) **EP 3 552 818 B1**

(12) **EUROPEAN PATENT SPECIFICATION**

(45) Date of publication and mention of the grant of the patent:
**11.05.2022 Bulletin 2022/19**

(21) Application number: **17878922.8**

(22) Date of filing: **01.12.2017**

(51) International Patent Classification (IPC):
*B32B 5/18* (2006.01)   *B32B 7/08* (2019.01)
*B32B 27/30* (2006.01)   *B32B 27/40* (2006.01)
*B32B 37/00* (2006.01)   *B60K 37/00* (2006.01)
*B60R 13/02* (2006.01)   *B32B 3/02* (2006.01)
*B32B 5/02* (2006.01)   *B32B 5/06* (2006.01)
*B32B 5/22* (2006.01)   *B32B 5/24* (2006.01)
*B32B 7/09* (2019.01)   *B32B 7/12* (2006.01)
*B32B 27/06* (2006.01)   *B32B 27/08* (2006.01)
*B62D 65/14* (2006.01)

(52) Cooperative Patent Classification (CPC):
B32B 3/02; B32B 5/022; B32B 5/024; B32B 5/06;
B32B 5/18; B32B 5/22; B32B 5/24; B32B 5/245;
B32B 7/08; B32B 7/09; B32B 7/12; B32B 27/065;
B32B 27/08; B32B 27/30; B32B 27/304;    (Cont.)

(86) International application number:
**PCT/JP2017/043371**

(87) International publication number:
**WO 2018/105536 (14.06.2018 Gazette 2018/24)**

(54) **LAMINATE AND MANUFACTURING METHOD THEREOF**

LAMINAT UND HERSTELLUNGSVERFAHREN DAFÜR

STRATIFIÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2016 JP 2016237850**

(43) Date of publication of application:
**16.10.2019 Bulletin 2019/42**

(73) Proprietor: **Zeon Corporation Tokyo 100-8246 (JP)**

(72) Inventor: **FUJIWARA Takanori Tokyo 100-8246 (JP)**

(74) Representative: **Maiwald Patent- und Rechtsanwaltsgesellschaft mbH Elisenhof Elisenstraße 3 80335 München (DE)**

(56) References cited:
WO-A1-2011/086813    WO-A1-2016/147637
WO-A1-2016/147638    JP-A- H11 225 846
JP-A- 2003 334 895    JP-A- 2014 172 216

- **DATABASE WPI Week 200425 Thomson Scientific, London, GB; AN 2004-260336 XP002799579, & JP 2003 334895 A (INOAC CORP KK) 25 November 2003 (2003-11-25)**
- **DATABASE WPI Week 200138 Thomson Scientific, London, GB; AN 2001-364683 XP002799580, & JP 2001 114911 A (ALOCA CO LTD) 24 April 2001 (2001-04-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**B32B 27/40; B32B 37/00; B60K 37/00;**
**B60R 13/02; B60R 13/0243; B60R 13/0256;**
B32B 2250/05; B32B 2266/0278; B32B 2305/02;
B32B 2305/022; B32B 2305/026; B32B 2305/20;
B32B 2405/00; B32B 2605/003; B32B 2605/08

**Description**

TECHNICAL FIELD

The present disclosure relates to a laminate having a thermoplastic resin layer, a backing member formed of a tape, and a foamed polyurethane layer. The present disclosure also relates to a method for producing the laminate.

BACKGROUND

A laminate in which a surface skin formed of a thermoplastic resin layer is lined with a foam of a polyurethane layer is widely applied as automobile interior materials used for automobile interior parts such as, for example, automobile instrument panels and door trims. The surface skin of such a laminate may be sewn to have stitched patterns in order for more sophisticated designability and higher marketability.

When the thermoplastic resin layer already sewn to have the stitched patterns is lined with the foam of the polyurethane layer, a problem arises that components of the polyurethane layer leak through seams onto the surface skin formed of the thermoplastic resin layer.

To address such a problem, PTL 1, for example, discloses a sewing of a thermoplastic resin material where sewing points set at given intervals on the thermoplastic resin material are melted in advance with a heating system and then the thermoplastic resin material is sewn along the melted sewing points. Subsequently in PTL 1, a refrigerant is sprayed over the sewing points on the thermoplastic resin material or the thermoplastic resin material is transferred into a cooling system to harden the sewing points so as to integrate sewing threads and the thermoplastic resin material as one unit, thus preventing the leakage of the resin.

PTL 2 prevents a foaming agent and so on from leaking out of thread seams by means of certain approaches, after a surface skin material is sewn with a thread, among such approaches are attaching a sealing tape along the seam on a back side, applying and then drying an adhesive along the seam on the back side to process cross-linking curing, or heating the seam on the back side to melt a resin-based thread so as to close slight gaps around the seam.

Moreover, PTL 3 lays a tape over a sewn area on a surface skin so as to prevent raw materials and so on of a foamed polyurethane layer from entering through seam holes in the sewn area.

PTL4 discloses a laminate made of a resin layer a nylon woven fabric and a polyurethane foam sewn together.

CITATION LIST

Patent Literature

PTL 1: JP2014-19060A
PTL 2: JPH3-1938A
PTL 3: WO2016/147637
PTL 4: JP2003/334895A

SUMMARY

(Technical Problem)

Conventional methods described in PTL 1 to 2 where the heating process and the cross-linking curing process are carried out, however, are inferior in workability. In addition, the inventor has found from further studies that components of the foamed polyurethane layer may leak out to the surface of the sewn thermoplastic resin layer in conventional methods described in PTL 2 to 3, where the tape is attached to the back side of the sewn surface skin, and therefore there is still room for further improvement.

It could therefore be helpful to provide a laminate in which components of a foamed polyurethane layer are suppressed from leaking out to a surface of a thermoplastic resin layer even when the thermoplastic resin layer is sewn.

It could also be helpful to provide a method for producing a laminate, by which, in a simple approach, one can favorably suppress components of a foamed polyurethane layer from leaking out to a surface of a thermoplastic resin layer even when the thermoplastic resin layer is sewn.

(Solution to Problem)

The inventor conducted diligent investigation with the aim of solving the problems set forth above. As a result, it was discovered that sewing a thermoplastic resin layer together with a backing member into one unit, wherein the backing member is made up of a tape having a porous substrate and an adhesive layer respectively disposed in specified positions, allows to obtain a laminate in which components of a foamed polyurethane layer hardly leak out to a surface of the sewn thermoplastic resin layer upon lining with the foamed polyurethane. This discovery lead to the present disclosure.

The present disclosure provides a laminate including: a backing member formed of a tape; a thermoplastic resin layer disposed on one side in a thickness direction of the backing member; and a foamed polyurethane layer disposed on another side in the thickness direction of the backing member, wherein the tape includes a porous substrate positioned on the foamed polyurethane layer side and an adhesive layer positioned on the thermoplastic resin layer side, and wherein the thermoplastic resin layer and the backing member are sewn together.

With the thermoplastic resin layer and the backing member being sewn together into one unit, wherein the backing member is formed of the specified tape, it is possible to favorably suppress leakage of components of the foamed polyurethane layer onto a surface of the thermoplastic resin layer even for the laminate where the thermoplastic resin layer is sewn.

The porous substrate is preferably made of non-woven fabric in the presently disclosed laminate.

With the porous substrate, included in the tape constituting the backing member, being made of the non-woven fabric, it is possible to further suppress the leakage of components of the foamed polyurethane layer onto the surface of the thermoplastic resin layer even for the laminate where the thermoplastic resin layer is sewn.

Further, the porous substrate of the presently disclosed laminate has mass per unit area (also referred to as "Amount" herein) of preferably 20 $g/m^2$ or more.

With the Amount of the porous substrate, included in the tape constituting the backing member, being equal to or greater than the aforementioned lower limit, it is possible to even further suppress the leakage of components of the foamed polyurethane layer onto the surface of the thermoplastic resin layer even for the laminate where the thermoplastic resin layer is sewn.

Further, the adhesive layer of the presently disclosed laminate preferably has porous structure.

With the adhesive layer, included in the tape constituting the backing member, having the porous structure, it is possible to still further suppress the leakage of components of the foamed polyurethane layer onto the surface of the thermoplastic resin layer even for the laminate where the thermoplastic resin layer is sewn.

Further, the presently disclosed laminate is preferably used for an automobile interior part.

Utilizing the presently disclosed laminate for production of automobile interior parts such as, for example, automobile instrument panels and door trims enables to obtain the automobile interior parts excellent in designability and marketability.

Further, the thermoplastic resin layer of the presently disclosed laminate is preferably formed of a vinyl chloride resin layer.

With the thermoplastic resin layer being formed of the vinyl chloride resin layer, one can utilize the presently disclosed laminate more suitably for producing automobile interior parts such as, for example, automobile instrument panels and door trims.

The present disclosure also provides a method for producing a laminate, wherein the laminate includes a thermoplastic resin layer; a backing member formed of a tape including a porous substrate and an adhesive layer; and a foamed polyurethane layer, the method including: sewing the thermoplastic resin layer and the backing member together so as to obtain a thermoplastic resin layer backed with the backing member in which the adhesive layer is positioned on the thermoplastic resin layer side; and lining the thermoplastic resin layer backed with the backing member with the foamed polyurethane layer from the porous substrate side so as to obtain the laminate.

By means of the method where firstly sewing the thermoplastic resin layer and the backing member together into one unit, wherein the backing member is formed of the specified tape, in such a way that the thermoplastic resin layer and the backing member have a specified positional relationship, then secondly lining the above unit with the foamed polyurethane layer, one can favorably suppress the leakage of components of the foamed polyurethane layer onto the surface of the thermoplastic resin layer in a simple approach.

(Advantageous Effect)

It is therefore possible to provide a laminate in which components of a foamed polyurethane layer are suppressed from leaking out to a surface of a thermoplastic resin layer even when the thermoplastic resin layer is sewn.

It is also possible to provide a method for producing a laminate, by which, in a simple approach, one can favorably suppress components of a foamed polyurethane layer from leaking out to a surface of a thermoplastic resin layer even when the thermoplastic resin layer is sewn.

## BRIEF DESCRIPTION OF THE DRAWINGS

In the accompanying drawings:

FIG. 1 is a top view of the laminate according to the present disclosure;
FIG. 2 is a bottom view of the thermoplastic resin layer backed with the backing member used in the production method according to the present disclosure; and
FIG. 3 is a partially enlarged sectional view of a sewn area in the laminate according to the present disclosure.

## DETAILED DESCRIPTION

Embodiments of the present disclosure will now be described in detail with reference to the accompanying drawings. It is noted that like reference numerals designate identical or corresponding components throughout the drawings. It is also noted that the embodiments described below shall not be construed as limiting the present disclosure.

(Laminate)

It is essential that a presently disclosed laminate has a backing member formed of a tape with specified structure; a thermoplastic resin layer disposed on one side in a thickness direction of the backing member; and a foamed polyurethane layer disposed on another side in the thickness direction of the backing member, as well as that the thermoplastic resin layer and the backing member in the laminate are sewn together into one unit. One cannot sufficiently suppress components of the foamed polyurethane layer from leaking out to a surface of the stitched thermoplastic resin layer unless the backing member, formed of the tape with specified structure, and the thermoplastic resin layer are sewn together integrally. With the aforementioned configuration adopted in the laminate according to the present disclosure, the components of the foamed polyurethane layer are thus prevented from leaking out to the surface of the thermoplastic resin layer whereas the surface is stitched. Consequently, the presently disclosed laminate can be suitably used, for example, for automobile interior parts, in particular, as automobile interior materials for producing the automobile interior parts such as automobile instrument panels and door trims decorated with stitches for better designability and marketability.

<Thermoplastic resin layer>

A thermoplastic resin layer, in the presently disclosed laminate, is disposed on one side in a thickness direction of a backing member, more specifically, disposed on a side of an adhesive layer included in a tape constituting the backing member. The thermoplastic resin layer usually forms an outermost layer of the laminate and can be suitably used as surface skins of automobile interior parts such as, for example, automobile instrument panels and door trims.
The thermoplastic resin layer usually includes thermoplastic resin and may further include plasticizers and additives. Particularly, it is preferable that the thermoplastic resin layer includes the thermoplastic resin and the plasticizer in combination in terms of imparting favorable flexibility to the thermoplastic resin layer.
In the present disclosure, the thermoplastic resin layer is usually a thermoplastic resin molded sheet having sheet-like structure, and is preferably a non-foamed thermoplastic resin molded sheet. As used herein, "sheet-like structure" refers to structure formed into a sheet shape and does not have any specially processed structure such as, for example, woven structure and non-woven structure described below.

«Thermoplastic resin»

Examples of the thermoplastic resin include, without particularly limiting to, acrylic resin, silicone resin, fluororesin, vinyl chloride resin, polyvinylidene chloride, polyethylene, polypropylene, ethylene-propylene copolymer, polyvinyl acetate, ethylene-vinyl acetate copolymer, polyvinyl alcohol, polyacetal, polystyrene, polyurethane, polyacrylonitrile, styrene-acrylonitrile copolymer, acrylonitrile-butadiene copolymer (nitrile rubber), acrylonitrile-butadiene-styrene copolymer (ABS resin), styrene-butadiene block copolymer or hydrogenated products thereof, styrene-isoprene block copolymer or hydrogenated products thereof, polyphenylene ether, modified polyphenylene ether, aliphatic polyamides, aromatic polyamides, polyamide imide, polycarbonate, polyphenylene sulfide, polysulfone, polyether sulfone, polyether nitrile, polyether ketone, polyketone, liquid crystal polymer, and ionomer. These listed above may be used alone or in combination of two or more.

[Vinyl chloride resin]

Among those listed above, vinyl chloride resin is preferred as the thermoplastic resin. With the thermoplastic resin layer containing vinyl chloride resin, it is easy to obtain the thermoplastic resin layer that can be suitably used as, for example, surface skins of highly embellished automobile interior parts, as vinyl chloride resin is generally excellent in processability.

[Percentage content]

Percentage content of the thermoplastic resin contained in the thermoplastic resin layer can be, without particularly limiting to, for example, 30% by mass or more, and 70% by mass or less.

<<Plasticizer>>

Examples of plasticizers that may be contained in the thermoplastic resin layer include, without particularly limiting to, plasticizers derived from phthalic acid, trimellitic acid, pyromellitic acid, adipic acid, azelaic acid, sebacic acid, maleic acid, fumaric acid, citric acid, itaconic acid, oleic acid, ricinoleic acid, stearic acid, phosphoric acid, glycol, glycerin, epoxy, and the like. Among these listed above, preferred are plasticizers derived, for instance, from trimellitic acid such as trimellitates, and from pyromellitic acid such as pyromellitates; and more preferred are trialkyl trimellitates (in which carbon number of each alkyl group in one trialkyl trimellitate molecule may be the same as or different from each other). By means of such plasticizers derived from trimellitic acid or pyromellitic acid, it is possible to further improve flexibility as well as processability of a thermoplastic resin composition that can be used in the thermoplastic resin layer or for forming the thermoplastic resin layer. And accordingly, it is possible to obtain, in a further favorable manner, the thermoplastic resin layer that can be suitably used, for example, as surface skins of highly embellished automobile interior parts.

[Percentage content]

Percentage content of the plasticizers optionally contained in the thermoplastic resin layer can be, without particularly limiting to, for example, 30% by mass or more, and 70% by mass or less.

«Additive»

The thermoplastic resin layer may further include additives such as, without particularly limiting to, for instance, surface modifiers such as silicone oil; additives having the same components as described in PTL 3, in the same percentage content as described in PTL 3.

«Forming method»

The thermoplastic resin layer can be formed by, for example, molding the thermoplastic resin composition containing the aforementioned components in a freely-selected method, preferably in powder molding, more preferably in powder slush molding.
The thermoplastic resin composition described above may be prepared by mixing the aforementioned components in a freely-selected method, or alternatively, commercial products of the thermoplastic resin composition may be used as well.
Examples of the mixing method include, without particularly liming to, a method where the components other than a dusting agent are mixed by dry blending, and subsequently the dusting agent is added to and further mixed with the mixture. The dry blending is preferably carried out using a Henschel mixer. Temperature during the dry blending is not particularly limited but is preferably 50°C or more, more preferably 70°C or more, and preferably 200°C or less.
Without being particularly limited to, the following method, for example, can be used in the powder slush molding. The following method involves: sprinkling the thermoplastic resin composition onto a mold already heated to within any given temperature range, and leaving the sprinkled thermoplastic resin composition for 5 seconds or more and 30 seconds or less, followed by shaking off any excess thermoplastic resin composition, and then further leaving the remained thermoplastic resin composition for 30 seconds or more and 3 minutes or less at any given temperature. Thereafter, cooling the mold to a temperature of 10°C or more and 60°C or less to release the resultant thermoplastic resin layer from the mold. The released thermoplastic resin layer comes out, for example, as a sheet-like molded product having the shape and the patterns of the mold.
The temperature of the mold to be heated during the molding is not particularly limited but is preferably 200°C or more, more preferably 220°C or more, preferably 300°C or less, and more preferably 280°C or less.

<Backing member>

A backing member in the presently disclosed laminate is made up solely of a tape in which a thermoplastic resin layer is disposed at one side while a foamed polyurethane layer is disposed at another side in the thickness direction of the backing member. It is required that the backing member is sewn together with the thermoplastic resin layer in the presently disclosed laminate. With the thermoplastic resin layer and the backing member consisting of the tape being sewn integrally, the backing member in the presently disclosed laminate serves to favorably prevent components of the foamed polyurethane layer from leaking out to a surface of the thermoplastic resin layer.

<<Tape>>

A tape constitutes the backing member and is composed of a porous substrate and an adhesive layer, wherein the porous substrate is located at a side of a foamed polyurethane layer described below while the adhesive layer is located at a side of the thermoplastic resin layer described above. The porous substrate in the tape may consist of a single porous substrate alone or may be a stacked body of a plurality of such substrates. Also, the adhesive layer in the tape may consist of a single adhesive layer alone or may be a stacked body of a plurality of such layers. Moreover, the tape may be in a form of a stacked body where the porous substrates and the adhesive layers are alternately overlaid in such a way that the porous substrate is positioned on one side and the adhesive layer is positioned on the other side in a given thickness direction.

As used herein, "porous substrate" is made of any compositions capable of forming porous structure, while "adhesive layer" is made of any compositions capable of demonstrating adhesiveness.

[Porous substrate]

Without any specific limitations are placed on the porous substrate, examples of the porous substrate include non-woven fabrics and foams, among which non-woven fabrics are preferable. Although the reason is not clear yet, the non-woven fabric as the porous substrate enables to favorably suppress leakage of components of a foamed polyurethane layer out on a surface of a thermoplastic resin layer in the laminate.

As used herein, "non-woven fabric" has non-woven structure formed by bonding fibers in any given directions or in random directions.

Embodiments will be hereinafter described according to a case where the porous substrate is nonwoven fabric, however, such embodiments shall not be construed as limiting the scope of the present disclosure.

[[Non-woven fabric]]

- Fiber composition -

Although no particular limitations are placed on fibers that constitutes the non-woven fabric as long as the fibers are capable of forming the non-woven structure described above, examples of the fibers constituting the nonwoven fabric include organic fibers such as fibers that contain polyamide-based resin, fibers that contain polyaramide-based resin, fibers that contain polyester-based resin, polyethylene fibers, polypropylene (PP) fibers, cellulose, cotton, hemp, wool, and silk; as well as inorganic fibers such as glass fibers, carbon fibers, alumina fibers, tungsten fibers, molybdenum fibers, titanium fibers, steel fibers, boron fibers, silicon carbide fibers, and silica fibers. One or more different types of fibers may be used for constituting the nonwoven fabric. Among these listed above, organic fibers are preferred as the fibers constituting the nonwoven fabric, with fibers that contain polyester-based resin and polypropylene fibers being more preferred. The polyester-based resin, which is a polycondensate between polyvalent carboxylic acids and polyhydric alcohols, generally has polar groups. Therefore, with the non-woven fabric made of the fibers that contain polyester-based resin, and with the backing member accordingly containing the polyester-based resin, it is possible to favorably adhere the backing member, the backing member being made up of the tape having the non-woven fabric as the porous substrate, together with a foamed polyurethane layer described below in the laminate. And as a result, one can favorably avoid delamination within the laminate. In addition, with the non-woven fabric made of the polypropylene fibers, and with the backing member accordingly containing the polypropylene resin, it is possible to subject the backing member formed of the tape more suitably to a sewing process as the tape will have further improved strength.

Further, suitable examples of the polyester-based resin as fiber compositions constituting the non-woven fabric include polyethylene terephthalate (PET), polytrimethylene terephthalate, polybuthylene terephthalate, polyethylene naphthalate, and polybuthylene naphthalate.

[[Amount]]

The porous substrate preferably has mass per unit area (Amount) of 20 g/m$^2$ or more, more preferably 30 g/m$^2$ or more, even more preferably 40 g/m$^2$ or more, still more preferably 50 g/m$^2$ or more, and yet more preferably 70 g/m$^2$ or more. And the porous substrate preferably has the Amount of 300 g/m$^2$ or less, more preferably 200 g/m$^2$ or less. With the Amount of the porous substrate in the tape constituting the backing member being equal to or greater than the aforementioned lower limit, compositions of the foamed polyurethane layer in contact with the porous substrate are less likely to permeate through the backing member. In contrast, with the Amount of the porous substrate being equal to or lower than the aforementioned upper limit, it is possible to favorably maintain sewing processability as well as to reduce processing costs.

[[Forming method]]

The porous substrate can be formed, for example, by obtaining the non-woven fabric by means of a method such as a dry-laid process where relatively short fibers are spread thin to form the fabric; a wet-laid process where even shorter fibers are blended with water and then collected up as in papermaking to form the fabric; a spunbond process where fibers, the fibers resulting from melting the aforementioned resin etc. and spinning it into thread-like form, are bonded together and dispersed thin; a melt-blown process where finer fibers, the finer fibers obtained under higher temperature environment than in the spunbond process, are utilized; and a combination of the spunbond process and the melt-blown process (e.g., SMS process where three-layer structure of low density layer/ high density layer/ low density layer is formed by overlaying the layers through in order of the spunbond process, the melt-blown process, and then the spunbond process).

The fibers can be bonded together by means of a method such as, for example, (a) chemical bonding or resin bonding where the fibers are chemically joined using resin as an adhesive; (b) thermal bonding where the fibers are fused by heat; (c) needlepunching where the fibers are mechanically intertwined using needles with hook; (d) hydro-entanglement or spunlace where the fibers are intertwined by high pressure water jets; and (e) stitch bonding where the fibers spread in plane are sewn together.

[adhesive layer]

Without any specific limitations are placed on the adhesive layer as long as demonstrating an adhesive function, the adhesive layer preferably has porous structure. Although the reason is not clear yet, with the adhesive layer having the porous structure, it is possible to further favorably suppress the leakage of components of the foamed polyurethane layer out to the surface of the thermoplastic resin layer in the laminate.

[[Compositions of adhesive layer]]

Examples of compositions of adhesives forming the adhesive layer include, for example, rubber adhesives such as synthetic rubber-based adhesives and natural rubber-based adhesives; urethane adhesives, preferably non-foamed urethane adhesives, such as acrylic urethane-based adhesives; polyolefin adhesives such as ethylene-vinyl acetate copolymer (EVA) and ethylene-methyl acrylate copolymer (EMA); acrylic adhesives; polyester adhesives; polyamide adhesives; epoxy adhesives; vinyl alkyl ether adhesives; fluoro adhesives; silicone adhesives and the like. Among these listed above, rubber adhesives, acrylic adhesives, and urethane adhesives are preferred, with rubber adhesives and acrylic adhesives being more preferred in terms of high adhesiveness as well as low costs. These adhesives may be used alone or in combination of two or more.

More specifically, examples of the rubber adhesives include rubber adhesives having natural rubber or synthetic rubber selected from various types as a base polymer. Specific examples of the synthetic rubber include styrene-based rubber (also referred to as styrene-based elastomer) such as styrene-butadiene (SB) rubber, styrene-isoprene (SI) rubber, styrene-isoprene-styrene (SIS) block copolymer rubber, styrene-butadiene-styrene (SBS) block copolymer rubber, styrene-ethylene-buthylene-styrene (SEBS) block copolymer rubber, styrene-ethylene-propylene-styrene (SEPS) block copolymer rubber, styrene-isoprene-propylene-styrene (SIPS) block copolymer rubber, and styrene-ethylene-propylene (SEP) block copolymer rubber; polyisoprene rubber; regenerated rubber; butyl rubber; polyisobuthylene; and modified products thereof. Among these listed above, styrene-based rubber (styrene-based elastomer) is preferred as the rubber adhesive, with SIS block copolymer rubber and SBS block copolymer rubber being more preferred. These base polymers of the rubber adhesives may be used alone or as a mixture of two or more.

In addition, specific examples of the acrylic adhesives include polymers that contain (meth)acrylate monomer units, preferably polymers that consist of (meth)acrylate monomer units. In the present disclosure, "(meth)acryl" is used to indicate "acryl" and/or "methacryl".

[[Amount]]

The adhesive layer preferably has mass per unit area (Amount) of 5 g/m$^2$ or more, more preferably 10 g/m$^2$ or more, even more preferably 20 g/m$^2$ or more. And the adhesive layer preferably has the Amount of 100 g/m$^2$ or less, more preferably 80 g/m$^2$ or less. With the Amount of the adhesive layer being equal to or greater than the aforementioned lower limit, compositions of the foamed polyurethane layer are less likely to permeate through the backing member formed of the tape having the adhesive layer. In contrast, with the Amount of the adhesive layer being equal to or lower than the aforementioned upper limit, it is possible to favorably maintain sewing processability as well as to reduce processing costs.

[Amount of tape]

Accordingly, the tape preferably has mass per unit area (Amount) of 40 g/m$^2$ or more, more preferably 60 g/m$^2$ or more, even more preferably 70 g/m$^2$ or more, still more preferably 80 g/m$^2$ or more and yet more preferably 90 g/m$^2$ or more. And the tape preferably has the Amount of 300 g/m$^2$ or less, more preferably 200 g/m$^2$ or less. With the Amount of the tape being equal to or greater than the aforementioned lower limit, compositions of the foamed polyurethane layer are less likely to permeate through the backing member. In contrast, with the Amount of the tape being equal to or lower than the aforementioned upper limit, it is possible to favorably maintain sewing processability as well as to reduce processing costs.

<Foamed polyurethane layer>

A foamed polyurethane layer included in the presently disclosed laminate is a foamed molded product made of polyurethane. And the foamed polyurethane layer is arranged on a side different from the side on which the thermoplastic payer is arranged in the thickness direction of the aforementioned backing member formed of the tape. More specifically, the foamed polyurethane layer in the presently disclosed laminate is overlaid on the porous substrate side of the tape constituting the aforementioned backing member, so that the overlaid foamed polyurethane layer serves as lining for the thermoplastic resin layer to which the backing member is attached.
The foamed polyurethane layer can be obtained according to a method such as, without particularly limited to, the method for forming the laminate described below.
When lined with the foamed polyurethane layer at a relatively high density of 0.2 g/cm$^3$ or more, strength of the laminate can be improved, however, a concern arise that compositions of the foamed polyurethane layer are possibly more likely to leak out to the surface of the thermoplastic resin layer upon lining with the foamed polyurethane layer. Nevertheless, the presently disclosed laminate, with the thermoplastic resin layer and the specified backing member sewn integrally, allows to favorably suppress components of the foamed polyurethane layer from leaking out to the surface of the thermoplastic resin layer even if polyurethane is foamed at relatively high density.

<Method for forming laminate>

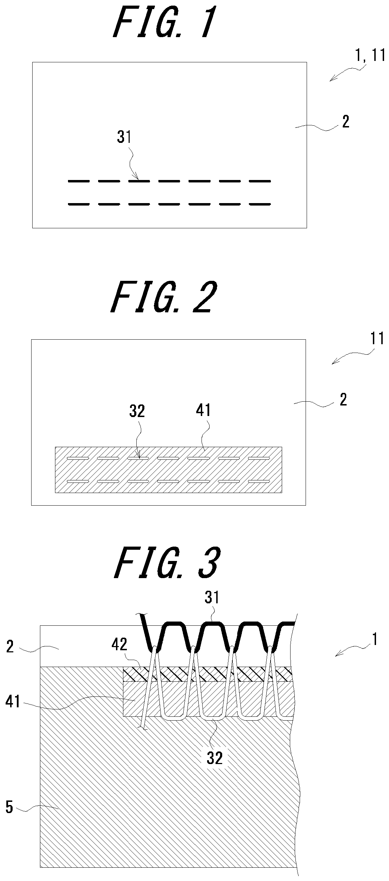

Although no specific limitations are placed on a method for forming the laminate, the following method, for example, can be employed as illustrated in FIGs. 1 to 3.
Firstly, the aforementioned backing member formed of the tape 4 is overlaid (so as to back) over an area to be sewn on a back face of the aforementioned thermoplastic resin layer 2 in such a way that the back face of the thermoplastic resin layer 2 is in contact with the adhesive layer 42. Next, the thermoplastic resin layer 2 and the backing member 4 are sewn together by a freely-selected sewing method to obtain a thermoplastic resin layer backed with the backing member 11 (hereinafter also expressed as a "thermoplastic resin layer/backing member"). Subsequently, raw materials of the foamed polyurethane such as isocyanates and polyols are reacted to polymerize on a side of the backing member 4 of the thermoplastic resin layer/backing member 11, and the polyurethane is foamed by any known method to directly form the foamed polyurethane layer 5 onto a back face (at a side where the backing member 4 lies) of the thermoplastic resin layer/backing member 11. A laminate 1 having the thermoplastic resin layer 2, the backing member formed of the tape 4, and the foamed polyurethane layer 5 is thus formed. The thermoplastic resin layer 2 usually serves as a surface skin 2.
The formation of the foamed polyurethane layer 5 may be performed either by an "open-style" exposed to the atmosphere or by a "closed-style" in an enclosed space.
In a situation where the formation of the foamed polyurethane layer is performed by the "closed-style", or even by the "open-style" if the polyurethane is foamed at higher density, a risk is increased that the compositions of the foamed polyurethane layer is more likely to leak out to the surface of the thermoplastic resin layer as a relatively high foaming pressure is generally applied. Nevertheless, the presently disclosed laminate with the thermoplastic resin layer and the backing member formed of the tape sewn integrally is believed to be able to favorably suppress components of the foamed polyurethane layer from leaking out to the surface of the thermoplastic resin layer even if the foamed polyurethane layer is formed under the relatively high-pressure environment.

<Sewing method>

Although no specific limitations are placed on a sewing method as long as the thermoplastic resin layer and the backing member formed of the tape can be sewn together in the laminate, the sewing is generally conducted prior to the formation of the aforementioned foamed polyurethane layer. The sewing may be done in one direction using any thread, or may be done, for instance, in both directions from front face and back face of the thermoplastic resin layer/backing member 11 using an upper thread 31 and a lower thread 32 as illustrated in FIGs. 1 to 3. While the sewing may be performed manually (hand-stitched), it is preferable to be performed mechanically by means of sewing equipment such as a sewing machine as wider varieties of sewing approaches are easily selectable.

As used herein for the case of using the sewing machine, "upper thread" normally refers to yarn for threading a sewing needle, while "lower thread" normally refers to yarn that is used wound around a bobbin to form a seam by passing through loops of the upper thread or by being hooked on the upper thread.

In the case of using the sewing machine, the sewing may be done in lockstitch where the upper thread and the lower thread are entwined together to form the seam or in a chain stitch where a single thread entwines into a chain-like pattern to form the seam, according to JIS B 9003:1999. Further, in the case of using the sewing machine, the sewing also may be done in other sewing approaches such as a multi-thread chain stitch and a pinpoint sewing. Moreover, a stitched pattern may be appropriately selected from a straight stitch, a zigzag stitch, a multiple decorative stitch, a twin needle stitch, a triple stitch, a cycle stitch, a satin stitch, a blind stitch, a scallop stitch, and so on depending on a desired design.

Although the reason is not clear yet, it is preferable to sew integrally using the upper thread 31 and the lower thread 32 as illustrated in FIGs. 1 to 3, from the viewpoint of further preventing compositions of the foamed polyurethane layer 5 from leaking out to the surface of the thermoplastic resin layer 2 through sewing holes occurred in the thermoplastic resin layer 2. In addition, as illustrated in FIG. 1, it is more preferable to sew in such a way that the upper thread 31 appears on the front face of the thermoplastic resin layer 2 while the lower thread 32 does not appear on the front face of the thermoplastic resin layer 2 (through the lower thread 32 may appear on the back face of the thermoplastic resin layer/backing member 11 as illustrated in FIG. 2). Surprisingly, the leakage of compositions of the foamed polyurethane layer 5 through the seam can be further suppressed by sewing integrally using the upper and lower threads so that the lower thread 32 being pulled up by the upper thread 31 as illustrated in FIG. 3.

[Thread]

Without any particular limitations are placed on the thread for the integral sewing as long as it is possible to sew the thermoplastic resin layer and the backing member formed of the tape together, examples of the thread include threads obtained by spinning short fibers such as cotton yarn and wool yarn; threads made of long fibers such as raw silk and synthetic fiber yarn. Among these listed above, synthetic fiber yarn is preferable, and threads made of polyester-based resin is more preferable. This is because the threads made of polyester-based resin generally has high durability and versatility, allowing to integrally sew the thermoplastic resin layer and the backing member more favorably.

Thread diameter (thickness) may be appropriately selected depending on a desired design.

[Needle]

General needles such as sewing needles may be used for the integral sewing. However, it is preferable to use needles with diameter (thickness) closed to the thread diameter in terms of further suppressing compositions of the foamed polyurethane layer from leaking out by reducing hole interstices possibly occurred around the seam in the sewn thermoplastic resin layer.

(Method for producing Laminate)

A method for producing a laminate according to the present disclosure is a method to produce a laminate having a thermoplastic resin layer; a backing member formed of a tape including a porous substrate and an adhesive layer; and a foamed polyurethane layer, wherein the method including: obtaining a thermoplastic resin layer/backing member; and lining the thermoplastic resin layer/backing member with the foamed polyurethane layer so as to obtain the laminate. The presently disclosed method for producing a laminate may further include other steps such as, for example, preparing the thermoplastic resin layer as well as preparing the backing member formed of the tape, in addition to the aforementioned step of obtaining the thermoplastic resin layer/backing member and the step of obtaining the laminate. By utilizing the presently disclosed method for producing the laminate, in which the thermoplastic resin layer and the backing member formed of the specified tape are sewn together to produce the laminate, one can sufficiently suppress components of the foamed polyurethane layer from leaking out on the surface of the sewn thermoplastic resin layer, for example, upon being lined with the foamed polyurethane layer. As a consequence, the laminate obtained according to the presently disclosed production method can be suitably used, for example, for automobile interior parts, in particular, as automobile interior materials for producing automobile instrument panels, door trims, and the like which are stitch-decorated to have improved designability and marketability.

<Obtaining thermoplastic resin layer backed with backing member>

A step of obtaining a thermoplastic resin layer/backing member will be described with reference to illustrations of FIGs. 2 to 3. In obtaining the thermoplastic resin layer/backing member, a thermoplastic resin layer 2 and a backing member formed of a tape 4 are sewn integrally so as to obtain the thermoplastic resin layer/backing member 11 in which an adhesive layer 42 is positioned on a side of the thermoplastic resin layer 2. The same composition, properties, and percent content as those described above for the laminate can be employed for the thermoplastic resin layer 2 and the backing member formed of the tape 4. The same sewing methods as those described above for the laminate can be employed as a method for integral sewing as well.
The thermoplastic resin layer/backing member thus obtained are used in obtaining a laminate described below in detail.

<Obtaining laminate>

In a step of obtaining a laminate, a side of the backing member 4 of the thermoplastic resin layer/backing member 11 resulting from the aforementioned step is lined with a foamed polyurethane layer 5 so as to obtain the laminate. The same methods as those described above for the laminate can be employed for a method for forming the foamed polyurethane layer 5 and a method for forming the laminate 1.

<Other steps>

The method for producing the laminate according to the present disclosure may further include other steps such as, for example, preparing the thermoplastic resin layer and preparing the backing member formed of the tape, prior to the aforementioned obtaining thermoplastic resin layer/backing member.

<<Preparing thermoplastic resin layer>>

In a step of preparing the thermoplastic resin layer, a commercially available thermoplastic resin layer may be used, for example, or the thermoplastic resin layer may be formed using thermoplastic compositions by means of the same forming method as described above for the laminate.
As an example, one or more types of vinyl chloride resin particles may be contained, and optionally one or more types of vinyl chloride resin fine particles may be further contained, in vinyl chloride resin that can be included in the thermoplastic resin composition used for forming the thermoplastic resin layer. Especially, vinyl chloride resin preferably contains at least vinyl chloride resin particles, more preferably contains vinyl chloride resin particles and vinyl chloride resin fine particles. At this point, the vinyl chloride resin particles normally function as a substrate of the thermoplastic resin layer, while the vinyl chloride resin fine particles normally function as a dusting agent (powder fluidity modifier).
The present description uses the term "resin particles" to refer to particles with a particle diameter of 30 $\mu$m or more, and the term "resin fine particles" to refer to particles with a particle diameter of less than 30 $\mu$m.
<<Preparing backing member>>
In a step of preparing the backing member formed of the tape, a commercially available tape may be used, or a non-woven fabric as the porous substrate, and the adhesive layer may be formed, for example, by means of the same forming method as described above for the laminate

EXAMPLES

The following provides a more specific description of the present disclosure based on examples. However, the present disclosure is not limited to the following examples. In the following description, "%" and "parts" used in expressing quantities are by mass, unless otherwise specified.

The following method was used to measure leak rate of the compositions of the foamed polyurethane layer out to the surface of the thermoplastic resin layer.

<Leak rate compositions of foamed polyurethane layer>

Condition of the thermoplastic resin layer (surface skin) in the obtained laminate was visually observed. More specifically, the number of stitches $S_L$ where the components of the foamed polyurethane layer had leaked out was counted among the number of total stitches, i.e. $S_T = 50$, applied on the surface of the thermoplastic resin layer. The extent to which the components of the foamed polyurethane layer had leaked out on the surface of the thermoplastic resin layer was subsequently calculated according to the following formula:

$$\text{Leak rate of the compositions of the foamed polyurethane layer (\%)} = (S_L / S_T) \times 100.$$

(Example 1)

<Preparation of thermoplastic resin composition>

Ingredients of the thermoplastic resin layer listed in Table 1 other than the plasticizers and the dusting agent were placed into a Henschel mixer and mixed. All of the plasticizers were added to the mixture after the temperature of the mixture had been increased to 80°C, and further heated to dry up the mixture (i.e., to bring the mixture to a state in which the plasticizers were absorbed by the thermoplastic resin in particle from so that the mixture became powdery). Thereafter, once the dried-up mixture had been cooled to a temperature of 100°C or lower, the dusting agent was added to the mixture to obtain a vinyl chloride resin composition for powder molding as the thermoplastic resin composition.

<Forming of thermoplastic resin layer>

The resultant thermoplastic resin composition was sprinkled onto a textured mold already heated to a temperature of 250°C and, after being left to melt for a given time of about 8 seconds to 20 seconds, excess thermoplastic resin composition was shaken off. The textured mold on which the thermoplastic resin composition had been sprinkled was then placed at rest in an oven set to a temperature of 200°C. At a point in time that 60 seconds had passed from the placement, the textured mold was cooled with water. Once the mold had been cooled to a temperature of 40°C, a vinyl chloride resin sheet having a size of 150 mm in width $\times$ 200 mm in length $\times$ 1 mm in thickness was removed from the mold to come out as a thermoplastic resin layer.

<Forming of thermoplastic resin layer backed with backing member>

As illustrated in FIG. 2, one piece of tape (manufactured by Nitto Lifetec Corporation), as the backing member, cut in 70 mm in length $\times$ 25 mm in width was affixed to a back face (in other words, to a face on which no pattern is textured as well as without direct contact with the mold) of the thermoplastic resin layer obtained as above. The number of stacked layers for the porous substrate and the adhesive layer in the tape constituting the backing member was regarded as one. At this point of time, the adhesive layer in the affixed tape was in contact with the thermoplastic resin layer, while the porous substrate in the tape was positioned at an outer side without contacting the thermoplastic resin layer. The thermoplastic resin layer and the backing member formed of the tape, the backing member remained affixed to the thermoplastic resin layer, are then sewn together to obtain a thermoplastic resin layer/backing member. A sewing machine ("LU-2860-7" manufactured by JUKI Corporation), a sewing needle ("DP$\times$17S" manufactured by Organ Needle Co., Ltd.) and a thread ("ACE CROWN for Sewing Vehicle Interior Materials" made of polyester-based resin, Nos. #5 for an upper thread and #8 for a lower thread, manufactured by Onuki Ltd.) were used for the sewing. Two stitched lines, each line consisting of 25 stitches, were made in approximately parallel, with a pace of 3 stitches per centimeter, at a speed of 3.3 stitches per second, and with a spacing of 8 mm between the stitched lines. That is, 50 stitches were made in total as in the following formula:

$$\text{Total number of stitches} = 25 \text{ stitches/line} \times 2 \text{ lines} = 50 \text{ stitches.}$$

Physical property values of the tape used were as in the following product specifications:

Porous substrate

| | |
|---|---|
| Material: | Non-woven fabric made of polyethylene terephthalate by spunbond process, |
| Amount: | 25 g/m$^2$, |

Adhesive layer

| | |
|---|---|
| Material: | Acrylic adhesive having porous structure |
| Amount: | 30 g/m$^2$, |

Thus,
Number of stacked layers for the porous substrate and the adhesive layer in the tape constituting the backing member: 1, and
Amount of the tape constituting the backing member: 55 g/m$^2$.

<Method for forming laminate>

The thermoplastic resin layer backed with the backing member obtained as above was placed into a mold of 200 mm in width × 300 mm in length × 10 mm in thickness in such a way that a front face (i.e., surface skin on which the pattern is textured) of the thermoplastic resin layer are faced bottom.

Separately from the above, a polyol mixture was obtained by mixing 50 parts of block adduct of propylene glycol with PO (propylene oxide)·EO (ethylene oxide) having hydroxyl value of 28, terminal EO unit content of 10%, and internal EO unit content of 4%; 50 parts of block adduct of glycerin with PO·EO having hydroxyl value of 21, terminal EO unit content of 14 %; 2.5 parts of water; 0.2 parts of ethylene glycol solution that contains triethylenediamine ("TEDA-L33" manufactured by Tosoh Corporation); 1.2 parts of triethanolamine; 0.5 parts of triethylamine, and 0.5 parts of a foam stabilizer ("F-122" manufactured by Shin-Etsu Chemical Co., Ltd.). The resultant polyol mixture was mixed with polymethylene polyphenylene polyisocyanate (polymeric MDI) at a ratio such that the index becomes 98 to prepare a mixture solution. The mixture solution thus prepared was poured over the porous substrate side of the thermoplastic resin layer/backing member laid in the mold as described above. The mold was then sealed by being covered with a lid of a 348 mm × 255 mm × 10 mm aluminum plate. After 5 minutes of leaving the sealed mold, a laminate in which the thermoplastic resin layer/backing member had been lined with the foamed polyurethane layer (thickness: 9 mm, density: 0.2 g/cm$^3$) was formed in the mold.

The laminate thus formed was taken out of the mold and subjected to calculating the leak rate of the compositions of the foamed polyurethane layer according to the method described above. The results are reported in Table 1.

(Example 2)

A thermoplastic resin composition, a thermoplastic resin layer, a thermoplastic resin layer/backing member, and a laminate were produced as in Example 1 with the exception that the number of stacked layers for the porous substrate and the adhesive layer in the tape was altered to 2 and accordingly the Amount of the backing member formed of the tape was changed to 110 g/m$^2$ in the forming of the thermoplastic resin layer/backing member.

The measurement and calculation were then performed as in Example 1. The results are reported in Table 1.

The backing member consisted of the tape in which the porous substrates and the adhesive layers are alternatively stacked in the order of porous substrate/ adhesive layer/ porous substrate/ adhesive layer.

(Example 3)

A thermoplastic resin composition, a thermoplastic resin layer, a thermoplastic resin layer/backing member, and a laminate were produced as in Example 1 with the exception that, in the forming of the thermoplastic resin layer/backing member, the tape was altered to a tape having the following properties:

Porous substrate

| | |
|---|---|
| Material: | Non-woven fabric made of polyethylene terephthalate by spunbond process, |
| Amount: | 50 g/m$^2$, |

Adhesive layer

Material: Acrylic adhesive having porous structure
Amount: 20 g/m$^2$,

Thus,
Number of stacked layers for the porous substrate and the adhesive layer in the tape constituting the backing member: 1, and
Amount of the tape constituting the backing member: 70 g/m$^2$.
The measurement and calculation were then performed as in Example 1. The results are reported in Table 1.

(Example 4)

A thermoplastic resin composition, a thermoplastic resin layer, a thermoplastic resin layer/backing member, and a laminate were produced as in Example 1 with the exception that, in the forming of the thermoplastic resin layer/backing member, the tape was altered to a tape having the following properties:
Porous substrate

Material: Non-woven fabric made of polyethylene terephthalate by spunbond process,
Amount: 70 g/m$^2$,

Adhesive layer

Material: Acrylic adhesive having porous structure
Amount: 20 g/m$^2$,

Thus,
Number of stacked layers for the porous substrate and the adhesive layer in the tape constituting the backing member: 1, and
Amount of the tape constituting the backing member: 90 g/m$^2$.
The measurement and calculation were then performed as in Example 1. The results are reported in Table 1.

(Example 5)

A thermoplastic resin composition, a thermoplastic resin layer, a thermoplastic resin layer/backing member, and a laminate were produced as in Example 1 with the exception that, in the forming of the thermoplastic resin layer/backing member, the tape was altered to a tape having the following properties:
Porous substrate

Material: Non-woven fabric made of polypropylene by SMS process,
Amount: 75 g/m$^2$,

Adhesive layer

Material: Acrylic adhesive having porous structure
Amount: 20 g/m$^2$,

Thus,
Number of stacked layers for the porous substrate and the adhesive layer in the tape constituting the backing member: 1, and
Amount of the tape constituting the backing member: 95 g/m$^2$.
The measurement and calculation were then performed as in Example 1. The results are reported in Table 1.

(Example 6)

A thermoplastic resin composition, a thermoplastic resin layer, a thermoplastic resin layer/backing member, and a laminate were produced as in Example 1 with the exception that, in the forming of the thermoplastic resin layer/backing member, the tape was altered to a tape having the following properties:
Porous substrate

| | Material: | Non-woven fabric made of polypropylene by SMS process, |
| | Amount: | 75 g/m$^2$, |

Adhesive layer

| | Material: | Rubber adhesive having porous structure |
| | Amount: | 20 g/m$^2$, |

Thus,
Number of stacked layers for the porous substrate and the adhesive layer in the tape constituting the backing member: 1, and
Amount of the tape constituting the backing member: 95 g/m$^2$.
The measurement and calculation were then performed as in Example 1. The results are reported in Table 1.

(Comparative Example 1)

A thermoplastic resin layer was sewn alone without affixing a tape to (i.e., without using a backing member) in the forming of the thermoplastic resin layer/backing member. In other words, a thermoplastic resin composition, a thermoplastic resin layer, and a laminate were produced as in Example 1 with the exception that the thermoplastic resin layer and the backing member were not sewn together.
The measurement and calculation were then performed as in Example 1. The results are reported in Table 1.

(Comparative Example 2)

A thermoplastic resin composition, a thermoplastic resin layer, a thermoplastic resin layer with a porous substrate attached, and a laminate were produced as in Example 1 with the exception that, in the forming of the thermoplastic resin layer/backing member, the porous substrate described below was used alone instead of the tape.
Porous substrate

| | Material: | Non-woven fabric made of polyethylene terephthalate by spunbond process, |
| | Amount: | 30 g/m$^2$, |

Thus,

| | Number of stacked layers for the porous substrate: | 1, and |
| | Amount of the porous substrate: | 30 g/m$^2$. |

The measurement and calculation were then performed as in Example 1. The results are reported in Table 1.

EP 3 552 818 B1

Table 1

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Thermoplastic rein layer backed with Backing member | Thermoplastic resin layer | Substrate | Vinyl chloride resin particles[1] [parts by mass] | 100 | 100 | 100 | 100 | 100 | 100 | 100 | 100 |
| | | Dusting agent | Vinyl chloride resin fine particles[2] [parts by mass] | 20 | 20 | 20 | 20 | 20 | 20 | 20 | 20 |
| | | Plasticizer | Trimellitate[3] [parts by mass] | 135 | 135 | 135 | 135 | 135 | 135 | 135 | 135 |
| | | | Epoxydized soybean oil[4] [parts by mass] | 5 | 5 | 5 | 5 | 5 | 5 | 5 | 5 |
| | | Stabilizer | Perchloric acid-treated hydrotalcite[5] [parts by mass] | 4.5 | 4.5 | 4.5 | 4.5 | 4.5 | 4.5 | 4.5 | 4.5 |
| | | | Zeolite[6] [parts by mass] | 2.4 | 2.4 | 2.4 | 2.4 | 2.4 | 2.4 | 2.4 | 2.4 |
| | | | $\beta$-diketone[7] [parts by mass] | 0.5 | 0.5 | 0.5 | 0.5 | 0.5 | 0.5 | 0.5 | 0.5 |
| | | | Zinc stearate[8] [parts by mass] | 0.2 | 0.2 | 0.2 | 0.2 | 0.2 | 0.2 | 0.2 | 0.2 |
| | | Pigment | Carbon black-based pigments[9] [parts by mass] | 4.0 | 4.0 | 4.0 | 4.0 | 4.0 | 4.0 | 4.0 | 4.0 |
| | Backing member (Tape) | | | * Details about Backing member is reported in Table 1 (cont'd). | | | | | | | |

(continued)

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Thermoplastic rein layer backed with Backing member | Backing member (Tape) | Porous substrate (non-woven fabric) | Material | PET | PET | PET | PET | PP | PP | | PET |
| | | | Amount per layer [g/m$^2$] | 25 | 25 | 50 | 70 | 75 | 75 | | 30 |
| | | | Amount [g/m$^2$] | 25 | 50 | 50 | 70 | 75 | 75 | | 30 |
| | | Adhesive layer (adhesive having porous structure) | Material | Acrylic | Acrylic | Acrylic | Acrylic | Acrylic | Rubber | | - |
| | | | Amount per layer [g/m$^2$] | 30 | 30 | 20 | 20 | 20 | 20 | | |
| | | | Amount [g/m$^2$] | 30 | 60 | 20 | 20 | 20 | 20 | | |
| | | Number of stacked layers for Porous substrate and Adhesive layer in Tape [-] | | 1 | 2 | 1 | 1 | 1 | 1 | 0 | 1 |
| | | Amount of Tape [g/m$^2$] | | 55 | 110 | 70 | 90 | 95 | 95 | - | 30 |
| | Thermoplastic resin layer | | | * Details about Thermoplastic resin layer is reported in Table 1. | | | | | | | |
| Evaluation | Leak rate of compositions of Foamed polyurethane layer [%] | | | 10 | 0 | 8 | 0 | 0 | 0 | 64 | 54 |

1) product name "ZEST ® 2500Z" (ZEST is a registered trademark in Japan, other countries, or both) manufactured by Shin Dai-ichi Vinyl Corporation,

2) product name "ZEST PQLTX" manufactured by Shin Dai-ichi Vinyl Corporation,

3) product name "TRIMEX N-08" manufactured by Kao Corporation,

4) product name "ADK CIZER O-130S" manufactured by ADEKA Corporation,

5) product name "ALCAMIZER® 5" (ALCAMIZER is a registered trademark in Japan, other countries, or both) manufactured by Kyowa Chemical Industry Co., Ltd.,

6) product name "MIZUKALIZER DS" manufactured by Mizusawa Industrial Chemicals, Ltd.,

7) product name "Karenz DK-1" manufactured by Showa Denko K.K.,

8) product name "SAKAI SZ-2000" manufactured by Sakai Chemical Industry Co., Ltd., and

9) product name "DA PX 1720(A) Black" manufactured by Dainichiseika Color and Chemicals Mfg. Co., Ltd.

It was found from Table 1 that compositions of the foamed polyurethane layer can be significantly suppressed from leaking out with the laminate of Examples 1 to 6 where the thermoplastic resin layer and the backing member formed of the tape are sewn integrally, in comparison with the laminate of Comparative Example 1 where the thermoplastic resin layer and the backing member are not sewn together (the thermoplastic resin layer is sewn alone, instead), without employing the specified backing member.

It was also found that the leakage of compositions of the foamed polyurethane layer can be significantly suppressed with the laminate of Examples 1 to 6 where the thermoplastic resin layer and the backing member formed of the tape are sewn integrally, in comparison with the laminate of Comparative Example 2 where the thermoplastic resin layer and the porous substrate are sewn together without having the adhesive layer in between and without employing the specified backing member.

INDUSTRIAL APPLICABILITY

It is thus possible to provide a laminate in which components of the foamed polyurethane layer are suppressed from leaking out on the surface of the thermoplastic resin layer even when the thermoplastic resin layer is sewn.

It is also possible to provide a method for producing a laminate, by which, in a simple approach, one can favorably suppress components of the foamed polyurethane layer from leaking out on the surface of the thermoplastic resin layer even when the thermoplastic resin layer is sewn.

REFERENCE SIGNS LIST

| 1 | Laminate |
| 11 | Thermoplastic resin layer backed with backing member |
| 2 | Thermoplastic resin layer (Surface skin) |
| 31 | Thread (Upper thread) |
| 32 | Thread (Lower thread) |
| 4 | Backing member formed of tape |
| 41 | Porous substrate |
| 42 | Adhesive layer |
| 5 | Foamed polyurethane layer |

**Claims**

1. A laminate comprising:

   a backing member formed of a tape;
   a thermoplastic resin layer disposed on one side in a thickness direction of the backing member; and
   a foamed polyurethane layer disposed on another side in the thickness direction of the backing member,
   wherein the tape constitutes the backing member and is composed of a porous substrate and an adhesive layer, wherein the porous substrate is located at the side of the foamed polyurethane layer while the adhesive layer is located at the side of the thermoplastic resin layer, and
   wherein the thermoplastic resin layer and the backing member are sewn together.

**2.** The laminate according to claim 1,
wherein the porous substrate comprises non-woven fabric.

**3.** The laminate according to claim 1 or 2,
wherein mass per unit area of the porous substrate is 20 g/m$^2$ or more.

**4.** The laminate according to any one of claims 1 to 3,
wherein the adhesive layer comprises porous structure.

**5.** The laminate according to any one of claims 1 to 4 used for an automobile interior part.

**6.** The laminate according to any one of claims 1 to 5,
wherein the thermoplastic resin layer comprises a vinyl chloride resin layer.

**7.** A method for producing a laminate,

wherein the laminate comprises a thermoplastic resin layer; a backing member formed of a tape; and a foamed polyurethane layer,
the method comprising:

sewing the thermoplastic resin layer and the backing member together so as to obtain a thermoplastic resin layer backed with the backing member in which the adhesive layer is positioned on the thermoplastic resin layer side; and
lining the thermoplastic resin layer backed with the backing member with the foamed polyurethane layer from the porous substrate side so as to obtain the laminate,

wherein the tape constitutes the backing member and is composed of a porous substrate and an adhesive layer wherein the porous substrate is located at the side of the foamed polyurethane layer while the adhesive layer is located at the side of the thermoplastic resin layer.

**Patentansprüche**

**1.** Ein Laminat, umfassend:

ein Trägerelement, das aus einem Band geformt ist;
eine thermoplastische Harzschicht, die auf einer Seite in Richtung der Dicke des Trägerelements angeordnet ist; und
eine geschäumte Polyurethanschicht, die auf einer anderen Seite in Richtung der Dicke des Trägerelements angeordnet ist,
wobei das Band das Trägerelement bildet und aus einem porösen Substrat und einer Klebstoffschicht besteht,
wobei sich das poröse Substrat auf der Seite der geschäumten Polyurethanschicht befindet, während sich die Klebstoffschicht auf der Seite der thermoplastischen Harzschicht befindet, und
wobei die thermoplastische Harzschicht und das Trägerelement miteinander vernäht sind.

**2.** Das Laminat nach Anspruch 1, wobei das poröse Substrat einen Vliesstoff umfasst.

**3.** Das Laminat nach Anspruch 1 oder 2, wobei die Masse pro Flächeneinheit des porösen Substrats 20 g/m$^2$ oder mehr beträgt.

**4.** Das Laminat nach einem der Ansprüche 1 bis 3, wobei die Klebstoffschicht eine poröse Struktur aufweist.

**5.** Das Laminat nach einem der Ansprüche 1 bis 4, das für ein Automobilinnenteil verwendet wird.

**6.** Das Laminat nach einem der Ansprüche 1 bis 5, wobei die thermoplastische Harzschicht eine Vinylchloridharzschicht umfasst.

**7.** Ein Verfahren zur Herstellung eines Laminats,

wobei das Laminat eine thermoplastische Harzschicht, ein aus einem Band gebildetes Trägerelement und eine geschäumte Polyurethanschicht umfasst,
das Verfahren umfassend:

Zusammennähen der thermoplastischen Harzschicht und des Trägerelements, um eine mit dem Trägerelement hinterlegte thermoplastische Harzschicht zu erhalten, bei der die Klebstoffschicht auf der Seite der thermoplastischen Harzschicht angeordnet ist; und
Beschichtung der mit dem Trägerelement hinterlegten thermoplastischen Harzschicht mit der geschäumten Polyurethanschicht von der Seite des porösen Substrats aus, um das Laminat zu erhalten,
wobei das Band das Trägerelement bildet und aus einem porösen Substrat und einer Klebstoffschicht besteht,
wobei das poröse Substrat auf der Seite der geschäumten Polyurethanschicht angeordnet ist, während die Klebstoffschicht auf der Seite der thermoplastischen Harzschicht angeordnet ist.

**Revendications**

1. Stratifié comportant :

   un élément de renfort formé d'une bande,
   une couche de résine thermoplastique disposée sur une première face dans une direction d'épaisseur de l'élément de renfort, et
   une couche de polyuréthane expansé disposée sur une seconde face dans la direction d'épaisseur de l'élément de renfort,
   dans lequel la bande constitue l'élément de renfort et est composée d'un substrat poreux et d'une couche adhésive, dans lequel le substrat poreux est situé du côté de la couche de polyuréthane expansé alors que la couche adhésive est située du côté de la couche de résine thermoplastique, et
   dans lequel la couche de résine thermoplastique et l'élément de renfort sont cousus ensemble.

2. Stratifié selon la revendication 1,
   dans lequel le substrat poreux comporte un tissu non-tissé.

3. Stratifié selon la revendication 1 ou 2,
   dans lequel une masse surfacique du substrat poreux est de 20 g/m$^2$ ou plus.

4. Stratifié selon l'une quelconque des revendications 1 à 3,
   dans lequel la couche adhésive comporte une structure poreuse.

5. Stratifié selon l'une quelconque des revendications 1 à 4 utilisé pour une pièce d'intérieur d'une automobile.

6. Stratifié selon l'une quelconque des revendications 1 à 5,
   dans lequel la couche de résine thermoplastique comporte une couche de résine de chlorure de vinyle.

7. Procédé pour produire un stratifié,

   dans lequel le stratifié comporte une couche de résine thermoplastique, un élément de renfort formé d'une bande et une couche de polyuréthane expansé,
   le procédé comportant les étapes consistant à :

      coudre ensemble la couche de résine thermoplastique et l'élément de renfort de manière à obtenir une couche de résine thermoplastique renforcée avec l'élément de renfort, dans lequel la couche adhésive est positionnée du côté de la couche de résine thermoplastique, et
      doubler la couche de résine thermoplastique renforcée avec l'élément de renfort avec la couche de polyuréthane expansé depuis le côté du substrat poreux de manière à obtenir le stratifié,

   dans lequel la bande constitue l'élément de renfort et est composée d'un substrat poreux et d'une couche adhésive, dans lequel le substrat poreux est situé du côté de la couche de polyuréthane en mousse alors que la couche adhésive est située du côté de la couche de résine thermoplastique.

## *FIG. 1*

1, 11

2

31

## *FIG. 2*

11

2

32    41

## *FIG. 3*

31

2

42

41

32

1

5

**EP 3 552 818 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014019060 A
- WO 2016147637 A
- JP 2003334895 A